# EUROPÄISCHE PATENTSCHRIFT

(11) **EP 2 731 767 B1**
(45) Veröffentlichungstag und Bekanntmachung des Hinweises auf die Patenterteilung: **24.02.2021**
(21) Anmeldenummer: 12738400.6
(22) Anmeldetag: 17.07.2012
(51) Int. Cl.: B28B 19/00, B28B 21/66, B28B 21/72, E04H 12/12, E04H 12/16, E04H 12/34

(54) **VERFAHREN UND GLEITSCHALUNG ZUM HERSTELLEN EINES BAUWERKS SOWIE BAUWERK**
A PROCESS AND SLIP-FORM CASTING FOR THE CONSTRUCTION OF A STRUCTURE AND A STRUCTURE
UN PROCÉDÉ ET UN COFFRAGE GLISSANT POUR LA CONSTRUCTION D'UNE STRUCTURE ET UNE STRUCTURE.

(30) Priorität: 17.07.2011 DE 102011107804
(43) Veröffentlichungstag der Anmeldung: 21.05.2014
(73) Patentinhaber: x-Tower Constructions GmbH, 80469 München (DE)
(72) Erfinder: WAGNER, Philipp, 97638 Mellrichstadt (DE)
(74) Vertreter: Prinz & Partner mbB
(86) Internationale Anmeldenummer: PCT/EP2012/003007
(87) Internationale Veröffentlichungsnummer: WO 2013/010664

(56) Entgegenhaltungen:
- FR-A5- 2 119 228
- US-A- 4 049 022

## Beschreibung

Die Erfindung betrifft eine Gleitschalung zum Herstellen eines Bauwerks und ein Verfahren zu seiner Herstellung unter Verwendung der Gleitschalung, insbesondere eines Turmbauwerkes, z.B. eines Windenergieanlagen-Turms, der einen Betonhohlkörper mit einer, einen Hohlraum umgebende Außenwand aus Beton aufweist..

Aus der US 4 049 022 A sind ein Verfahren und eine Vorrichtung zum Herstellen von Betonringen bekannt, wobei mit einer verlorenen Schalung gearbeitet wird. Die Schalung wir unter verwendung einer vorrichtungsseitigen, sich drehenden Trommel hergestellt, indem ein Faden zusammen mit einer breiartigen Schlemme aus einer Düse ausgestoßen und auf die Trommel aufgespritzt wird. Da sich die Trommel dreht, wird der Faden ringförmig gewickelt. Nach Trocknen einer oder zweier beabstandeter, so hergestellter Schalen wird ein Betonkern gegossen.

Die FR 2 119 228 A5 beschreibt eine Gleitschalung zum Herstellen von Wänden und dergleichen. Das besondere an dieser Gleitschalung besteht darin, dass die hergestellte Wand mit einer Abdeckung, z.B. aus Papier, versehen wird, die von einer Rolle abgerollt wird.

Windenergieanlagen (WEA) müssen heutzutage immer leistungsfähiger und gleichzeitig wirtschaftlicher werden. Aufgrund der zunehmend mit Windenergieanlagen verbauten Küstengebiete werden Windenergieanlagen nun immer häufiger auch in küstenfernen Gebieten errichtet. In diesen Gebieten müssen die Windenergieanlagen zur Effektivitätssteigerung entsprechend dem Höhenwindgradienten größere Nabenhöhen (Abstand der Rotornabe vom Boden) haben. Damit steigen jedoch die Anforderungen und vor allem die Kosten zur Herstellung der WEA-Türme. Darüber hinaus werden die Türme mit zunehmender Nabenhöhe auch deutlich schwerer, da sie trotz eines höher sitzenden Kopfflansches die gleiche Stabilität und Steifigkeit erfüllen müssen. Mit zunehmender Höhe haben sich darum in den letzten Jahren insbesondere WEA-Türme aus Stahlbeton etabliert, die auch in Hybridbauweise errichtet werden. Hybridbauweise bedeutet, dass der untere Abschnitt des Turms aus Stahlbeton ist, auf den dann ein Stahlturm aufgesetzt wird, der wiederum die Gondel trägt.

Aufgabe der Erfindung ist es, eine Gleitschalung zur Herstellung des Bauwerks gemäß Anspruch und ein Verfahren gemäß Anspruch 5, zur Herstellung dieses Bauwerks, insbesondere eines Windenergieanlagen-Turms, das einen Betonhohlkörper aufweist, anzugeben, wobei das Verfahren die Herstellung hochbelasteter Bauteile insbesondere großer Länge erlaubt, die eine verbesserte Kurzzeitfestigkeit und insbesondere ein verbessertes Ermüdungsverhalten aufweisen..

Die Erfindung löst diese Aufgabe durch eine Gleitschalung zur Herstellung eines Betonhohlkörpers eines lasttragenden Bauwerks, insbesondere eines Windenergieanlagen-Turmes. Diese Gleitschalung wird insbesondere zur Durchführung des nachfolgend erläuterten erfindungsgemäßen Verfahrens verwendet. Die Gleitschalung umfasst eine vorlaufende innenseitige und außenseitige Schalung, die zwischen sich den Ringraum zur Herstellung einer Wandschicht aus Massenbeton bilden. Eine in Gleitrichtung nachlaufende Schalung, die der innen- und/oder der außenseitigen Schalung zugeordnet ist, das heißt nach der innen- und/oder außenliegenden Schalung liegt, ist zum Abziehen der auf die innere Wandschicht aufgebrachten äußeren Wandschicht vorgesehen. Aus diesem Grund ist die nachlaufende Schalung radial von der zugeordneten vorlaufenden Schalung etwas beabstandet, und zwar um die Dicke der äußeren Wandschicht.

Durch die Gleitschalung nach der Erfindung ist ein schnelles Herstellen des Hohlkörpers möglich, und zwar bei gleichbleibend hoher Qualität.

Die vorlaufende und die nachlaufende Schalung sollten mechanisch miteinander gekoppelt sein, sodass der Abstand zwischen den Schalungen immer gleich bleibt und nur ein Antriebssystem (i. d. R. Hubzylinder) erforderlich ist.

Eine automatische Einbindung der textilen Bewehrung in den Feinbeton kann dadurch vorgesehen sein, dass die Gleitschalung selbst mit einer Rollenhalterung zur Aufnahme zumindest einer Rolle textiler Bewehrung ausgestattet ist.

Vorzugsweise ist die Rollenhalterung mit einer Bremse ausgestattet, die einen gewissen Abrollwiderstand auf die Rolle ausübt. Dadurch wird die Rolle und damit die textile Bewehrung immer leicht gespannt eingebracht.

Gerade wenn die Bewehrung das Bauwerk komplett umgeben soll, sollten mehrere um den Umfang der ringförmig verlaufenden Gleitschalung verteilte Rollenhalterungen vorgesehen sein. Die Gesamtbahnbreite aller in den Rollenhalterungen aufgenommenen Rollen ist insbesondere größer als der Umfang des herzustellenden Bauteils.

Eine nahe der nachlaufenden Schalung vorhandene Führung sorgt für eine Umlenkung der textilen Bewehrung, wenn sie von der Rolle kommend möglichst an die innere Wandschicht angedrückt werden muss.

Die nachlaufende Schalung kann einlaufseitig als Trichter ausgeführt sein, das heißt, sich trichterförmig aufweiten, sodass herabfallende kleine Feinbetonbrocken wieder in die Schalung geführt werden und wieder an dem Bauteil angebracht werden.

Die einzelnen ringsegmentartigen Schalungsteile werden miteinander fest gekoppelt oder sind seitlich zueinander verschiebbar und ergänzen sich zu einem geschlossen umlaufenden Schalungsring. Sind die Schalungsteile seitlich zueinander verschieblich, lassen sich automatisch konische Bauwerke herstellen. Bei feststehenden Segmenten wird ein zylindrischen Bauteil hergestellt.

Das erfindungsgemäße Verfahren zum Herstellen eines lasttragenden Bauteils, das einen Betonhohlkörper mit einer, einen Hohlraum umgebenden Außenwand aus Beton aufweist, sieht die Verwendung der erfindungsgemäßen Gleitschalung vor, wobei die Außenwand durch folgende Schritte produziert wird:
Herstellen einer inneren Wandschicht aus Massenbeton, und
Herstellen einer äußeren Wandschicht aus Feinbeton unter Einbettung einer textilen Bewehrung in die äußere Wandschicht, indem der Massenbeton in den Ringraum zwischen der vorlaufenden innenseitigen und der außenseitigen Schalung gegeben wird, wobei die Wandschichten ein Verbundbauteil bilden und wobei auf die außen noch nasse, zuerst hergestellte der beiden Wandschichten direkt die andere Wandschicht zur Bildung eines innigen und chemischen Verbundes aufgebracht wird, und Abziehen der äußeren Wandschicht mittels der nachlaufenden Schalung.

Die beiden Schichten des Verbundbauteils gehen somit ineinander über und sind nicht voneinander getrennt, wie dies beispielsweise beim Sanieren oder partiellen Verstärken von Bauwerken der Fall ist, deren rissige Außenwand oder geschwächte Tragelemente mit einem sogenannten Textilbeton verstärkt werden können. Stand der Technik kommt es zu einer nachträglichen, zusätzlich aufgebrachten Schicht zwischen der alten Bauteiloberfläche und der neuen textilbewehrten Verstärkungsschicht. Bei der Verstärkung von Decken zur Traglaststeigerung im Stand der Technik geschieht dies ebenfalls nachträglich, punktuell und entsprechend den Anforderungen, die beim Herstellen der Decke noch nicht gegeben waren. Ähnliches gilt im Prinzip für die angesprochene Sanierung, bei der das Tragverhalten des Ursprungsbauteils über die Jahre abgenommen hat. Ziel dieser Maßnahmen ist vor allem eine Steigerung der Tragfähigkeit. Gleiches gilt bei Umschnürungsbewehrungen von Stützen und Pfeilern. Die typische Dünnwandigkeit von einzeln hergestellten Textilbetonbauteilen hat wiederum zur Folge, dass solche Bauteile in ihren schlanken Querschnitten nur vergleichsweise geringe Druckkräfte durchleiten können und insbesondere große Biege-, Torsions- oder Querkraftspannungen in den filigranen flächigen oder schwach gekrümmten Bauteilen nur unzureichend aufnehmen können.

Das erfindungsgemäße Verfahren sorgt ferner für eine größere Schlankheit im Bauteilquerschnitt, eine verbesserte Außenoberfläche, eine verbesserte Rissverteilung, eine höhere Duktilität, eine verbesserte statische und dynamische Steifigkeit.

Im Sinne der Aufgabe der Erfindung reichen die Ziele und Eigenschaften des vorgeschlagenen Verbundbauteils deutlich weiter bzw. in eine andere Richtung, als der hier skizzierte Stand der Technik in Sanierung und Neubau und die dort zu erfüllenden Aufgaben. Als Beispiel sei hier angeführt, dass ein reines Übertragen bisheriger Anwendungen gemäß dem Stand der Technik die gewünschten Ziele zum Beispiel deshalb verfehlt, weil bei dynamisch belasteten Bauwerken, wie WEA-Türme, die starken nichtlinearen Spannungsschwankungen und Bewegungen unterworfen sind, zu befürchten ist, dass nachtäglich aufgetragene Schichten sich nach einer bestimmten Anzahl von Lastwechseln zumindest abschnittsweise lösen, was u. a. durch die Erfindung vermieden wird.

Durch das erfindungsgemäß hergestellte Verbundbauteil ergänzen sich die Eigenschaften der äußeren und der inneren Wandschicht. Die vornehmlich auf Druck belastete innere Wandschicht besteht aus günstigem Massenbeton, der handelsübliche Zemente und Zuschlagstoffe mit erheblicher Korngröße aufweisen kann und, gemäß einer Ausführungsform, herkömmlichen Bewehrungsstahl enthalten kann. Der mehrfach so teure Feinbeton mit einem höheren Anteil an Zementleim und kostenintensiven Zuschlagstoffen wird nur für die dünne äußere Wandschicht verwendet und dient von seinen Abmessungen her ausschließlich dazu, die textile Bewehrung komplett einzubetten. Durch das erfindungsgemäße Verfahren der Herstellung wird die Verbundwirkung beider Schichten sichergestellt, die anschließend gemeinsam für die gewünschten Eigenschaften, insbesondere das verbesserte Ermüdungsverhalten sorgen. Die äußere Wandschicht ist aufgrund der textilen Bewehrung extrem zuglastfest und kompensiert damit die Schwäche des Massenbetons. Der Massenbeton ist bei Beanspruchungsarten, wie Biegung, Querkraft, Normalkraft und Torsion durch seine relativ größere Dicke im Vergleich zum dünnen Feinbeton resistent gegen Beulen, Knittern und Knicken und hält die dünne Feinbetonschicht auch bei Durchleitung großer Kraftanteile formstabil. Durch die innige, auch chemische Verbindung der Schichten vereinigen sich die Vorteile und Merkmale der Feinbetonschicht mit denen der Massenbetonschicht gemäß der Erfindung in vorteilhafter Weise und ergeben eine Gesamtstruktur, die erheblich leistungsfähiger ist als jede Schicht für sich alleine.

Des Weiteren kann zum einen durch die Korrosionsbeständigkeit des Textils die sonst geforderte Passivierungsschicht entfallen, und der Gesamtaufbau kann eine geringere Dicke aufweisen, wodurch das Eigengewicht der gesamten Wandschicht und des Bauwerks deutlich geringer ist. Zum anderen kann die Dicke der inneren Wandschicht je nach Bemessung um den Anteil der für die Zugkraft sonst nötigen Stabstahlbewehrung und Betonumschließung und Überdeckung verringert werden, die durch das Textil übernommen wird. Gleiches gilt für den Wegfall der Bewehrung durch den Textilbeton.

Durch den entstehenden vollflächigen Verbund wird die innere Schicht bei weitem weniger auf Zug belastet, und das Ermüdungsverhalten des gesamten Bauwerks wird erheblich verbessert, da das im Vergleich zu herkömmlichem Bewehrungsstahl in Massenbeton duktilere Textil in Feinbeton insbesondere einen wesentlichen Teil der auftretenden Zugbeanspruchungen, die insbesondere bei Windenergieanlagen-Türmen dynamischen und nichtlinearen Charakter haben, übernimmt. Der innenliegende Massenbeton nimmt entsprechend seinen Fähigkeiten insbesondere die auftretenden Druckkräfte auf.

Aufgrund der textilen Bewehrung wird die Kurzzeitfestigkeit verbessert, bzw. kann das Bauwerk zudem so ausgelegt werden, dass sich bei nur geringem Mehraufwand (mehr textile Bewehrung) durch die Addition der Dehnsteifigkeiten der Bewehrungen das zulässige Gebrauchslastniveau entsprechend anhebt und der Querschnitt somit nochmals später reißt. Je nach Bemessung kann das Verbundbauteil bei den über den Betriebszeitraum möglichen auftretenden Extremlastfällen zwar auch vom Zustand I (ungerissen) in den Zustand II (gerissen) übergehen. Infolge der engmaschigen textilen Bewehrung und dem damit einhergehenden, um eine Zehnerpotenz feiner verteilten Rissbild mit dem ebenfalls um eine Zehnerpotenz schmaleren Öffnungsgrad kommt es aber gar nicht zu einer ausgeprägten tiefen Rissbildung bis in die innere, auf Druck belastete und durch den Bewehrungsstahl korrosionsgefährdete Schicht. Die auftretenden Risse sind vielmehr so fein, dass sie sich sofort wieder zusetzen, eine Korrosion von Stahlbewehrungen in tieferen Schichten verhindert wird und eine Karbonatisierung des Betons nicht stattfindet.

Durch die fein verteilte Kraftleitung der Zugkräfte in der engmaschigen Bewehrung dicht unter der Oberfläche verhält sich das gesamte Bauteil durch die Wirkung beider Schichten gemeinsam deutlich duktiler als ein vergleichbares Bauteil nur in Stahlbeton oder nur in Textilbeton. Die Verbundwirkung beider Schichten erzeugt die insbesondere beim WEA-Turmbau gewünschte Steifigkeit durch den wirtschaftlicheren und jeweils materialgerechten Einsatz der verwendeten Baustoffe in ihren jeweiligen Schichten. Dies ist insbesondere bei Windenergieanlagen-Türmen mit multiaxialer Beanspruchung von besonderer Bedeutung, denn die Türme von Windenergieanlagen müssen über ihre Lebensdauer bis zu eine Milliarde Lastwechsel aushalten (High-Cycle-Fatigue). Es gibt kaum ein Bauwerk, welches annähernd diese Dimensionen von Lastwechseln aushalten muss, weshalb WEA-Türme eine eigene, vor allem eigenständige Kategorie von Bauwerken ist, die auch nicht mit Brückenbauten verglichen werden kann, die um mehrere Größenordnungen weniger Lastwechsel bei gleichzeitig längerer Lebensdauer ausgesetzt sind. Eben diese Anforderung wird durch die Verbundwirkung beider Schichten und das dadurch erzielte verbesserte Ermüdungsverhalten optimal gelöst wird.

Der Stahlbeton-Turmabschnitt von Windenergieanlagen erleidet während seiner Lebensdauer andere und vor allem in einem kürzeren Zeitraum intensivere Beanspruchungen als das bei anderen Bauteilen in anderen Bauwerken der Fall ist. Hier spielen insbesondere die Problematiken der nichtlinearen Verzerrungs- und Schädigungsentwicklung während des Ermüdungsprozesses und die zugrundeliegenden Materialeigenschaften sowie deren Auswirkungen auf die Gebrauchstauglichkeit und die daraus resultierende erforderliche Bemessung des Bauteils eine ganz wesentliche Rolle. Bislang wird den Ermüdungsprozessen unterworfenen (Stahl-)Betonbauteilen bei nicht konstanter Spannungsschwingweite und nicht konstanter Lastamplitude der durch die Eigenschaften dieses Werkstoffes und seiner in den Regelwerken bestimmten Normen gemäß seiner Fähigkeiten mit entsprechender Bauteildimensionierung entgegenwirkt. Bei Windenergieanlagen-Türmen wird durch Überdrücken die Zugschwellbeanspruchung möglichst gering gehalten, und fast der gesamte Nachweis der bei Windenergieanlagen nicht unerheblichen Spannungsschwingweite im Bereich der Druckschwellbeanspruchung geführt. Dabei ist einzig die Dauerschwingfestigkeit des Betons von Bedeutung, da Windenergieanlagen mit über einer Milliarde Lastwechseln die mit einer Million Lastwechseln angegebene Zeitfestigkeit des Betons um mehrere Größenordnungen überschreitet.

Als Massenbeton wird insbesondere Beton mit Gesteinskörnungen verwendet, mit Korngrößen größer 4 mm, vorzugsweise bis maximal 32 mm.

Die Herstellung des Verbundbauteils erfolgt wie gesagt dadurch, dass auf die außen noch nasse, grünstandfeste, zuerst hergestellte der beiden Wandschichten direkt die andere Wandschicht zur Bildung eines innigen und chemischen Verbundes aufgebracht wird. Die Außenwand wird also in Nass-in-nass-Bauweise hergestellt. Die Erfindung lehrt, beide Schichten, nämlich die hauptsächlich druckbelastete innere Wandschicht und die zugbelastete äußere Wandschicht im Wesentlichen gleichzeitig herzustellen, nämlich im Nass-in-nass-Verfahren. Durch dieses Verfahren ergibt sich eine dauerhafte vollflächige und stoffschlüssige, spannungsarme Verbindung der beiden Schichten, was trotz zweier Schichten insbesondere das geforderte verbesserte Ermüdungsverhalten gegenüber einem einschichtigen Wandaufbau zuverlässig gewährleistet, weil Schwindrisse an der Grenze zwischen beiden Schichten bei der gemeinsamen Hydratation vermieden werden.

Bei Windenergieanlagen ist bisher aufgrund der Extremlasten der Beton nach einiger Zeit zumindest in den Zustand II. versetzt, was bedeutet, dass er außenseitig Risse zeigt und an dieser Stelle nur die Stahlbewehrung und Vorspannglieder die auftretenden Zugbeanspruchungen übernehmen können. Durch die Erfindung bleibt durch die verbesserte Kurzzeitfestigkeit der äußeren Wandschicht der innere Betonquerschnitt normalerweise vollständig im Zustand I., das heißt, er bleibt ungerissen. Damit gibt es keine tiefen Risse, die sich im Laufe der Zeit bis in die Bewehrung fortsetzen könnten und zum Korrodieren der Stahlbewehrung und zum Karbonatisieren des Betons führen würden.

Die textile Bewehrung ist insbesondere ein sogenanntes Textilgelege, vorzugsweise auch ein dreidimensionales Gelege mit mehreren übereinandergestapelten und beabstandeten 2D-Gelegen. Ein Gelege ist eine textile Flächenstruktur und besteht aus mehreren Lagen parallel angeordneter bi- oder multiaxialer Faserrovings.

Die textile Bewehrung sollte als sogenanntes Grid ausgebildet sein, das heißt, eine Art harzgetränkte Kreuzstruktur von Faserrovings mit Öffnungen. Durch diese Öffnungen tritt der Feinbeton hindurch, sodass er innenseitig und außenseitig an der textilen Bewehrung anliegt oder, mit anderen Worten, die textile Bewehrung ist komplett im Feinbeton eingebettet (Faser-Matrix-Verbund).

Der Betonhohlkörper sollte außenseitig quer zu seiner Haupterstreckungsrichtung oder Hauptbelastungsrichtung vollständig von dem Textilgewebe umgeben sein, sodass die innere Wandschicht möglichst zugentlastet ist, wenn die Hauptbelastung aufgebracht wird.

Der Betonhohlkörper hat vorzugsweise eine langgestreckte Gestalt und ist über wenigstens eine Teillänge in Umfangsrichtung vorzugsweise komplett von der Außenwandschicht, vorzugsweise auch komplett von dem Textilgelege, umgeben. Bezogen auf einen Turm bedeutet dies: Beispielsweise könnte ein unterer oder ein oberer Abschnitt des Turms (oder natürlich der gesamte Turm) in Umfangsrichtung vollständig von der Außenwandschicht und auch von dem Textilgewebe umgeben sein. Darüber hinaus können aber auch Abschnitte vorhanden sein, in denen das Textilgewebe und/oder die Außenwandschicht aus Bemessungsgründen nicht vorhanden sind, um Kosten zu sparen.

Wenn der Betonhohlkörper langgestreckt ist, kann das Textilgewebe vorzugsweise in Bahnen verlegt werden. Die Verlegungsrichtung der Bahnen kann in Längsrichtung, in Querrichtung, unter spiralförmigen Wickelns und/oder kreuzförmig verlaufend erfolgen. Bevorzugt überlappen sich die Ränder benachbarter Bahnabschnitte, um zum einen keine Rissausgangspunkte zu liefern und zum anderen die durchlaufende Zugtragwirkung mit einer kraftschlüssigen Verbindung durch die Übergreifung zu garantieren.

Zur weiteren Stabilisierung ist es als Option möglich, Fortsätze der textilen Bewehrung, im Querschnitt gesehen, nach innen verlaufen zu lassen. Somit kann die Bewehrung nahe der Außenhaut des Betonhohlkörpers verlaufen, aber Ausläufer nach innen haben, die eine zusätzliche Stabilisierung bewirken. In diesem Zusammenhang können diese Fortsätze auch bis zur radialen Innenseite der Außenwand verlaufen und insbesondere auch als Schubbewehrung dienen. Es entstehen damit Kreissegmente zwischen den rippenartigen Fortsätzen, die aus Massenbeton sind. Gegebenenfalls kann der Betonhohlkörper auch auf der Innenseite eine Schicht mit Feinbeton aufweisen, in die eine textile Bewehrung eingebettet ist.

Alternativ oder zusätzlich zur kompletten Ummantelung der äußeren Wandschicht durch die textile Bewehrung kann die textile Bewehrung in einem langgestreckten Betonhohlkörper in Form von textilen Bewehrungsbahnen in Längsrichtung verlaufen, die zwischen sich beabstandet sind, sodass streifenförmige Lücken ohne textile Bewehrung entstehen.

Die Außenwand wird vorzugsweise in Gleitschalungsbauweise hergestellt. Diese Bauweise ist sehr kosteneffektiv, weil damit große Bauwerke schnell hergestellt werden können. Darüber hinaus ist bei diesem Herstellungsprozess gesichert, dass der große Betonhohlkörper, der mehrere Dutzend Meter, bei Türmen vorzugsweise mehr als 90 m, vorzugsweise mehr als 130 m Länge bzw. Höhe aufweist, als Monolith hergestellt wird, bei dem von Beginn bis zum Schluss die Schichten nass-in-nass und kontinuierlich gleich einer Extrusion hergestellt und verbunden werden. Mit dem erfindungsgemäßen Gleitverfahren wird entweder ein konisch zulaufender Turm oder ein zylindrischer Turm hergestellt.

Bei einer WEA wird bevorzugt der ganze Betonteil des Turmes, oberhalb des Fundaments beginnend, als Monolith hergestellt.

Die bevorzugte Ausführungsform sieht vor, dass zuerst die innere Wandschicht hergestellt wird und dann auf die innere Wandschicht die äußere Wandschicht aufgetragen wird. Die innere Wandschicht ist noch in keiner Weise durchgetrocknet, vielmehr ist der Beton noch zu Beginn seines Abbindeprozesses, er ist grünstandfest.

Bei der Herstellung der weiter oben besprochenen Sanierungsschichten in Textilbeton wird die zusätzliche Schicht Textilbeton in mehreren händischen und aufwendigen Arbeitsschritten auf den zuvor vorbereiteten Untergrund aufgebracht, indem auf den durch Sandstrahlen aufgerauten und gewässerten Untergrund zunächst eine Feinbetonschicht aufgebracht wird, in die das Textil eingedrückt und anschließend mit weiterem Feinbeton zugespachtelt oder zugespritzt wird. Dieser Vorgang wird so oft wiederholt, bis der Bemessung entsprechend ausreichend viele Lagen Grid appliziert wurden. Daran anschließend erhält der Querschnitt seine i. d. R. sehr dünne Überdeckung und an der Oberfläche das gewünschte Finishing. Es handelt sich um ein sehr arbeitsintensives Verfahren.

Zur Herstellung von reinen Textilbauteilen geht man bislang ebenfalls in mehreren Arbeitsschritten vor, die von Hand verrichtet werden: Zunächst wird die Schalung mit einer ersten Schicht Feinbeton ausgekleidet, in die dann ebenfalls so viele Lagen textile Bewehrung im Wechsel mit Feinbeton eingebracht werden, bis der gewünschte Bauteilquerschnitt hergestellt ist.

Das erfindungsgemäße Herstellverfahren, welches die Erfindung zum Bau des beschriebenen Verbundbauteils vorschlägt, ist gemäß der bevorzugten Ausführungsform eine Weiterentwicklung eines Gleitverfahrens. Gleitverfahren sind als kontinuierliche Herstellverfahren für Betonelemente bekannt. Mit Gleitschalungen werden Bauwerke aus Stahlbeton in einem kontinuierlichen Bauablauf, bestehend aus dem Herstellen von Aussparungen, Öffnungen und der Montage von Einbauteilen, dem Bewehren und dem Betonieren hergestellt. Der Gleitvorgang des Schalungskörpers erfolgt mit Kletterstangen, an denen sich die gesamte Schalungskonstruktion hochzieht. Die durch Hydraulik eingesetzte Kraft wird mittels Hubzylinder umgesetzt. Die Schalhaut ist so bemessen, dass der Beton, der während des Gleitens abbindet, am unteren Ende beim Verlassen der Schalung eine ausreichende Festigkeit besitzt. Die entscheidenden Vorteile der Gleitschalung gegenüber Kletterschalungssystemen sind der schnelle Baufortschritt, eine ankerlose, homogene, gleichmäßige Betonoberfläche ohne Stöße, Lunker, Luftporen und der wirtschaftliche Einbau von Beton und Bewehrung, bei der Erstellung von hohen Strukturen zusätzlich insbesondere die Wind- und Wetterunempfindlichkeit.

Die erfindungsgemäße Weiterentwicklung zur Erstellung der erfindungsgemäßen Querschnitte in einem kontinuierlichen und damit in einem sowohl materialgerechten als auch verarbeitungsgerechten Verarbeitungsprozess sieht vorzugsweise vor, eine herkömmliche vorzugsweise linearzylindrische Gleitschalung als vorauslaufende Schalung zu nutzen, in der ein Massen(stahl)betonquerschnitt nass-in-nass in horizontaler Schichtung hergestellt wird und ein monolithisches fugenloses Bauteil hervorbringt. Nach der Erfindung wird der verwendete Massenbeton in seinen Eigenschaften so eingestellt, dass er am unteren Ende die vorauslaufende Schalung in einem grünstandfesten und gleitrauen Zustand verlässt, was eine innige chemische Verbindung mit der nun folgenden, zweiten aufgebrachten, vorzugsweise automatisiert aufgespritzten, Betonschicht, in diesem Fall der ersten Feinbetonschicht, ermöglicht. Auf diese erste Feinbetonschicht wird die erste (oder einzige) Lage 2D- oder 3D-Textilbewehrung appliziert, und anschließend werden weitere Lagen Feinbeton und Gelege aufgebracht, bis der gewünschte Querschnitt erreicht ist.

Anschließend wird über das Nachlaufgerüst, das zum Beispiel am vorauslaufenden Gerüst angehängt ist und zum Beispiel über Führungsrollen während des Nachlaufens passgenau in seiner Position gehalten wird, der Feinbeton glattgezogen.

Entsprechend den unterschiedlichen Betonsorten wird der Massenbeton vorzugsweise über einen Flaschenverdichter gerüttelt. Der Feinbeton kann über einen Hochfrequenzverdichter mit einer auf den Feinbeton angepassten Verdichtungsenergie verdichtet werden, die zum einen das erhärtende Kristallgefüge des tiefer liegenden Massenbetons in seinem Abbindeprozess nicht stört und zum anderen garantiert, dass der Feinbeton die Textilbewehrung möglichst vollständig umfließt und umschließt. Dadurch wird der gewünschte sichere Verbund zwischen Gelege und Betonmatrix gewährleistet.

Die Geometrie der Nachlaufschalung und die dort eingetragene Verdichtungsenergie ermöglichten im Gegensatz zu herkömmlichen Spritzbetontechniken einen erheblich geringeren Luftporenanteil im Feinbetonquerschnitt und somit einen besseren Haftverbund zwischen Textilbewehrung und Beton. Die konisch trichterförmig geformte Oberkante der Nachlaufschalung fängt zudem den durch etwaigen Rückprall herabfallenden Feinbeton auf, wodurch Materialverluste beim Aufbringen des Feinbetons vermieden werden. Beim Verlassen der vorgeschlagenen Nachlaufschalung weist die Oberfläche des Feinbetons durch die Hochfrequenzverdichtung keine Poren, Lunker oder ähnliche Fehlstellen mehr auf, sondern stellt ein sehr glattes und somit witterungsbeständiges Finishing dar.

Nachdem beide Betonquerschnitte hergestellt wurden, härten der Massenbeton und der Feinbeton gemeinsam aus. Die erfindungsgemäße gleichzeitige und kontinuierliche Herstellung auch von sich durchdringenden Querschnitten ermöglicht einen Abbinde- und Aushärteprozess bei geringstmöglichen Schwindspannungen und sichert somit das erwünschte ermüdungsresistente Tragverhalten des Gesamtquerschnittes.

Sofern der Massenbeton in dem vorzugsweisen Gleitverfahren mit Bewehrungsstahl ausgeführt wird, erfolgt die Herstellung der inneren Wandschicht nach den üblichen Verfahren des Einbringens von Bewehrungsstahl in den Betonquerschnitt. Die Textilbewehrung wird hingegen vorzugsweise wahlweise längs, quer, kreuzweise oder diagonal verlegt und zum Beispiel von Rollen abgewickelt, die in dafür vorgesehenen Vorrichtungen an der Gleitschalung eingesetzt sind und die die korrekte Position und das Straffen der Textilbewehrung während des Einbaus bewerkstelligen.

Eine alternative Ausführungsform zur zuvor genannten sieht vor, dass derselbe Beton für beide Schichten verwendet wird. Dabei wird ein Massenbeton mit relativ hohem Fließmittelanteil, vorzugsweise Mikrosilika-Anteil, verwendet. Der Beton entmischt sich im Herstellprozess während des Gleitens im Bereich des Einbringens der textilen Bewehrung kontrolliert. Damit laufen feinere Zuschlagstoffe und Zementmilch des Massenbetons nach außen durch die textile Bewehrung, die wie eine Art Gitter oder Filter wirkt, sodass die Betonzusammensetzung im Querschnitt betrachtet unterschiedlich ist. Es ergibt sich im Bereich der textilen Bewehrung eine Art Feinbeton, der dann in den gröberen Massenbeton übergeht. Auch hier bilden Massen- und Feinbeton eine innige Einheit, da sie in diesem Fall sogar aus ein und demselben Beton hergestellt werden.

Die obige alternative Ausführungsform kann auch folgendermaßen verbessert werden: Eine gitterartige Stützstruktur (ähnlich einem vertikalen Gatter) an der Gleitschalung stützt die textile Bewehrung beim Einbringen von Beton, indem die Stützstruktur in den Ringspalt zwischen innenliegender und außenliegender Schalung ragt. Die textile Bewehrung drückt, sobald Beton eingebracht wird, gegen die Stützstruktur. Die gitterartige Stützstruktur kontrolliert das Entmischen des Betons und lässt lediglich die feineren Bestandteile durchtreten und um die textile Bewehrung fließen. Diese Alternative sieht vor, dass der Massenbeton mit entsprechenden Fließmitteln aufbereitet wird, sodass der die textile Bewehrung wie bei der Variante mit einem eigens darauf abgestimmten Feinbeton komplett umschließt und der gewünschte Haftverbund durch die Zugabe des Fließmittels und gegebenenfalls anderer Zuschlagstoffe, die den Haftverbund zur Textilbewehrung verbessern, sichergestellt ist.

Dieser alternative Gleitprozess nur mit Massenbeton sieht vor, dass die Betonverdichter jeweils genau dann in Betrieb sind, wenn die trennende Stützstruktur zwischen dem groben und dem feinen Beton herausgezogen wird, um etwaige hinterlassene Hohlräume zu schließen. Ferner wird das Ankleben von Beton an einer zu groben Oberfläche an der Stützstruktur vermieden, da der Beton nur durch sein Eigengewicht nach unten rutscht.

Beide Gleitverfahren, d.h. das mit zwei verschiedenen Betonsorten und das mit einer sich entmischenden Betonsorte, können erfindungsgemäß so durchgeführt werden, dass die Schalungsgerüste vollständig eingehaust und klimatisiert sind. Auf diese Weise werden Konditionen ähnlich denen einer Fertigteil-Produktion in einer Halle geschaffen. Ferner wird dem Vorurteil der Fachwelt in Bezug auf die Wetteranfälligkeit und nicht gleichbleibenden Herstellkonditionen von Gleitverfahren aufgrund der selten optimalen Außentemperaturen vorgebeugt. Die Erfindung schafft so ein Fertigteilwerk auf kleinster Fläche.

Beide Gleitverfahren berücksichtigen einen materialgerechten Umgang mit den verwendeten Baustoffen. Durch beide Gleitverfahren wird ein sicherer und stoffschlüssiger vollflächiger Verbund zwischen beiden Betonschichten garantiert. Infolge der gleichzeitigen Abbindeprozesse beider Schichten sind wenig innere Spannungen im Verbundbauteil vorhanden, insbesondere im Bereich der Verbindung der Schichten. Die innige Verbindung beider Schichten ist die Grundlage, um die gewollte Verbundwirkung in dem Bauteil vom ersten Moment an zu erzielen. Über die gewünschte Lebensdauer wird trotz hohem dynamischem Lasteintrag dauerhaft die Ermüdungsresistenz und fehlerfreie Funktion des Verbundes ohne jede Delamination und Abscherung garantiert. Die durch den erfindungsgemäßen Herstellprozess erzeugte Spannungsarmut während der gemeinsamen Hydratation beider Schichten auf makroskopischer wie auch auf mikroskopischer Ebene ist die herstellbedingte Voraussetzung für geringere Mengen an Schwindrissen in der Zementmörtelmatrix beider Schichten und an der Grenzschicht zwischen beiden Schichten. Mikrorisse wachsen über den Beanspruchungszeitraum deutlich langsamer, was dem Beton die gewünschte Ermüdungsresistenz verleiht. Das gilt insbesondere für WEA-Türme mit ihren charakteristischen hochdynamisch nichtlinearen Beanspruchungen.

Die innere Wandschicht sollte vorzugsweise aus Stahlbeton hergestellt sein. Damit kann die innere Wandschicht zusätzlich zur Druckkraft auch Teile der Zug-, Biege- und/oder Torsionsbeanspruchungen aufnehmen.

Zudem ist vorzugsweise an Oberflächen ohne Textilbewehrung die vorschriftsmäßige Oberflächenbewehrung vorzusehen.

Unabhängig von der Verwendung des Stahlbetons für die innere Wandschicht ist zu betonen, dass die äußere textilbewehrte Wandschicht ohne Stahlbewehrung ausgeführt ist.

Das Bauteil wird darüber hinaus gemäß der bevorzugten Ausführungsform nach seinem Herstellen mittels Spanngliedern vorgespannt. Diese Spannglieder verlaufen in der Außenwand und/oder im Hohlraum selbst. Das erfindungsgemäße Bauwerk ist also zusätzlich noch vorgespannt, sodass die Außenwand überdrückt wird. Durch diese zusätzliche Maßnahme lassen sich Türme von enormer Bauhöhe bei gleichzeitig großer Schlankheit herstellen. Die Kombination aus den drei Elementen Massenbeton, Textilbeton und Vorspanngliedern erhöht insbesondere bei stark auf Biegung beanspruchten Bauteilen, wie Windenergieanlagen-Türmen, durch die optimale Verteilung der auftretenden Kraftflüsse auf diese drei Bauelemente die Wirtschaftlichkeit zusätzlich. Da der Betonhohlkörper bereits in der Textilbetonschicht weitere Zugkräfte aufnehmen kann, kann die Zahl der dann noch notwendigen Zugglieder bei sonst gleichen Bedingungen gegenüber einem konventionellen Betonhohlkörper entsprechend verringert werden.

Die textile Bewehrung (Gelege/Grid/Sheet) kann aus Glasfasern oder Basaltfasern oder Aramid oder aus Kohlefasern oder aus einer Mischung dieser Fasern zum Beispiel in einem bi- oder multiaxialen 2D- oder 3D-Gelege sein, oder die Bewehrung kann eine Kombination verschiedener Gelegesorten sein. Die textile Bewehrung aus Kohlefaser stellt die bevorzugte Ausführungsform dar.

Die textile Bewehrung wird darüber hinaus vorzugsweise in leicht gespanntem Zustand verbaut, das heißt, das weiche Textil hängt während des Applizierens und des Einbettens im Beton nicht durch, sondern wird leicht gespannt. Damit soll ausgeschlossen werden, dass Ausbauchungen entstehen, die anschließend Inhomogenitäten im Kraftverlauf ergeben würden.

Wie bereits erläutert, ist das erfindungsgemäß hergestellte Bauwerk insbesondere ein Abschnitt eines Windenergieanlagen-Turms, wobei das Bauwerk eine Höhe von wenigstens 90 m, vorzugsweise wenigstens 130 m besitzt.

Das Bauwerk kann in Hybridbauweise hergestellt werden, das heißt, der untere Teil ist ein erfindungsgemäß hergestellter Betonhohlkörper, auf den ein Stahlturm aufgesetzt ist.

Der Betonhohlkörper als Windenergieanlagen-Turm oder Abschnitt dieses Turms kann optional nur am unteren Abschnitt die textile Bewehrung aufweisen, wo die Momentenkräfte besonders groß sind, im Bereich von Knotenpunkten, oder nur am oberen Abschnitt, wodurch die Kopflast infolge der größeren möglichen Schlankheit des Turmes niedriger gehalten werden kann. Dies ist besonders vorteilhaft, weil die Belastung an der Turmspitze durch die in den Wind gestellte schwere Gondel und den angreifenden Rotorschub besonders hoch ist und darum insbesondere sehr hohe Türme zum "Kippen" neigen.

Obwohl das erfindungsgemäße Verfahren vorzugsweise für Windenergieanlagen-Türme ausgeführt ist, ist es auch für andere große, insbesondere langgestreckte Bauwerke mit einer Länge von vorzugsweise wenigstens 50 m vorteilhaft einzusetzen, nämlich zum Beispiel für Kamine, Kühltürme, Fernsehturmschäfte, Hochhauskerne, Silos, Bunker, Schächte, oder Gründungsstrukturen, insbesondere von Offshore-Einrichtungen, Brückenpylone, Brückenhohlkästen und dergleichen.

Durch die höhere erzielbare Steifigkeit des Bauwerks und gegebenenfalls auch durch die geringere Kopflast lenkt der Windenergieanlagen-Turm nicht so stark aus, was für eine stabilere Gondellage sorgt und damit für einen besseren Betrieb der Anlage, weil sich die Schwingungen des Turms nicht in die Rotorblätter fortpflanzen und dort zu den Schwingungen der Rotorblätter zusätzlich aufaddieren.

Das erfindungsgemäße Verfahren mit zwei unterschiedlichen Betonsorten mit zwei unterschiedlichen Bewehrungsarten (bei Verwendung von Stahlbeton) in unterschiedlichen geometrischen Abmessungen und mit unterschiedlichen Materialeigenschaften verbessert zudem die Schwingungsdämpfung des Bauteils erheblich, was bei WEA-Türmen von sehr großer Bedeutung und sehr vorteilhaft ist.

Darüber hinaus ist aufgrund des fugenlosen Feinbetons die Außenhaut sehr glatt, fest und sehr bewitterungsresistent.

Die Betonsorten sind vorzugsweise derart aufeinander abgestimmt, dass beide Wandbereiche das gleiche Schwindmaß aufweisen und die für die Ermüdungsfestigkeit wichtige Vermeidung von Schwindrissen auch im Grenzbereich beider Schichten unterbleibt.

Der Feinbeton kann erfindungsgemäß auch der Gruppe der "UHPC" Ultra-High-Performance-Concrete angehören.

Zusammenfassend ist bezüglich des erfindungsgemäßen Verfahrens zu betonen:
Das erfindungsgemäße Verfahren ermöglicht dank einer simultanen Herstellung beider Wandschichten die Reduzierung der naturgemäß auftretenden Schwindrisse während der Hydratation auf ein Minimum, wodurch auch im Bereich des Übergangs beider Schichten keine Risshäufung auftritt. Erfindungsgemäß wird dies durch das gleichzeitige oder annähernd gleichzeitige Abbinden der Schichten mit aufeinander abgestimmten Schwindmaßen im Abbindeprozess, der sogenannten Nass-in-nass-Technik, erreicht. Diese Art der Herstellung ist die Voraussetzung dafür, dass sich die vorteilhaften Eigenschaften des Textilbetons und die des Massen(stahl)betons zu einem bemessungsfähigen Verbundbauteil ergänzen, bei dem die Composite-Wirkung sich derart entfalten kann, dass die Eigenschaften jeder einzelnen Wandschicht voll in das Verbundverhalten einfließen und dieses Verhalten über den gesamten Lebenszeitraum auch bei fortschreitender Ermüdung erhalten bleibt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Ansicht einer Windenergieanlage mit einem erfindungsgemäß hergestellten Windenergieanlagen-Turm,
- Figur 2a einen Querschnitt durch das Bauwerk nach Figur 1,
- Figur 2b eine Seitenansicht des Bauwerks nach Figur 1,
- Figuren 3a bis 3d vergrößerte Schnittansichten durch verschiedene Varianten des erfindungsgemäß hergestellten Bauwerks in dem mit einem Rechteck begrenzten Bereich gemäß Figur 2a,
- Figuren 4a bis 4d Ansichten von verschiedenen bei der Erfindung eingesetzten textilen Bewehrungen,
- Figuren 5 bis 7 Querschnittsansichten und entsprechende Längsschnitte von durch das erfindungsgemäße Verfahren hergestellten gemäß verschiedenen Varianten,
- Figuren 9 bis 11 weitere Querschnitte von Varianten des erfindungsgemäß hergestellten Bauwerks,
- Figur 12 eine Querschnittsansicht durch ein nach einem weiteren erfindungsgemäßen Verfahren hergestelltes Bauwerk,
- Figur 13 eine Längsschnittansicht durch das erfindungsgemäß hergestellte Bauwerk gemäß einer Variante,
- Figur 14 eine Längsschnittansicht durch die erfindungsgemäße Gleitschalung mit längs abgewickelter Textilbewehrung während der Durchführung des erfindungsgemäßen Verfahrens,
- Figur 15 eine Längsschnittansicht durch die erfindungsgemäße Gleitschalung mit quer abgewickelter Textilbewehrung, und
- Figur 16 eine Längsschnittansicht durch die erfindungsgemäße Gleitschalung gemäß einer weiteren Ausführungsform.

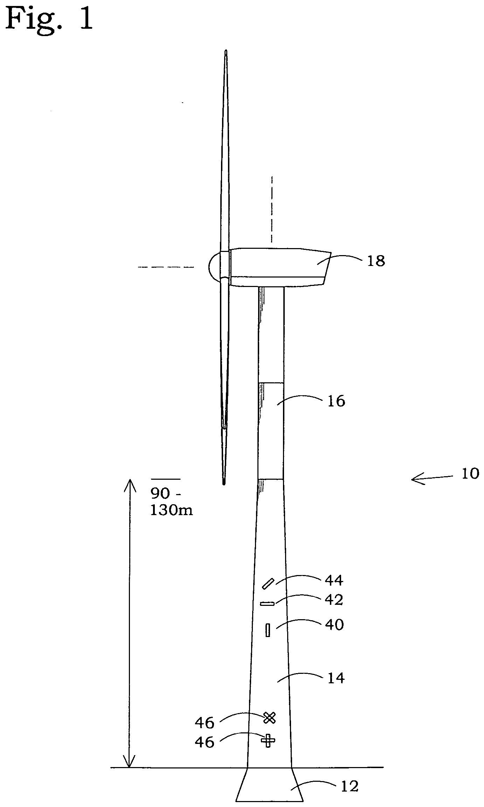

In Figur 1 ist ein lasttragendes Bauwerk in Form eines Windenergieanlagen-Turms 10 dargestellt, der als Hybridturm ausgeführt ist, was für das Bauwerk jedoch nicht einschränkend zu verstehen ist. Das Bauwerk hat im Falle der hier dargestellten Windenergieanlage einen von einem Fundament 12 ausgehenden Betonhohlkörper 14, der eine Höhe von wenigstens 90 m, insbesondere wenigstens 130 m besitzt. Auf den Betonhohlkörper 14 ist ein Stahlturm 16 aufgesetzt, der die Gondel 18 trägt.

Der Betonhohlkörper 14 kann monolithisch hergestellt sein oder aus mehreren Einzelteilen bestehen, die aufeinander aufgesetzt und gegebenenfalls miteinander verbunden sein können. Die Betonhohlkörper haben in diesem Fall vorzugsweise eine Mindestlänge von 10 m und sind langgestreckte Körper.

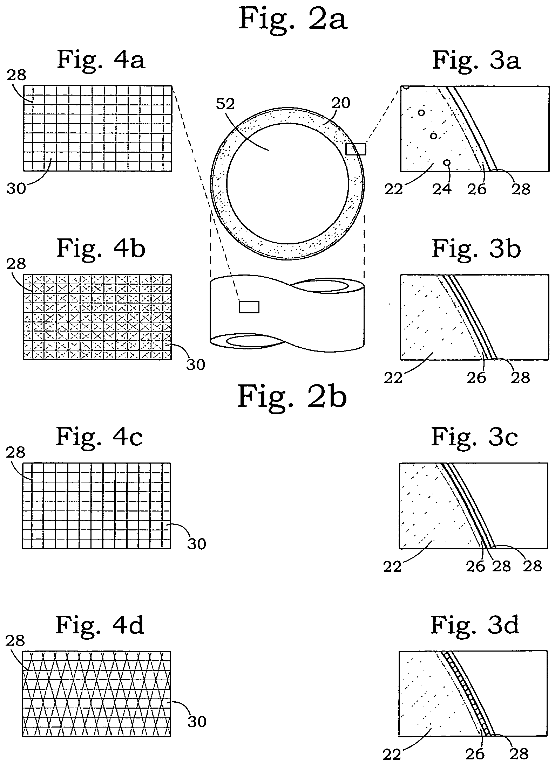

Figur 2a zeigt einen Schnitt durch den Betonhohlkörper 14, der als Rohr, vorzugsweise linearzylindrisches Rohr ausgeführt ist.

Der Betonhohlkörper 14 wird durch eine Außenwand 20 gebildet die den Hohlraum 52 im Inneren des Bauwerks begrenzt. Die Außenwand 20 ist aus mehreren Wandschichten zusammengesetzt, welche ein Verbundbauteil bilden.

Die innere Wandschicht 22 (siehe Figuren 3a bis 3d) besteht aus Massenbeton. Massenbeton bedeutet, dieser Beton ist sehr günstig und enthält Kies mit Korngrößen größer 4 mm, bis üblicherweise 32 mm. Die Gesteinskörnung wird nach der Euronorm EN 12620 angegeben.

Diese innere Wandschicht 22 ist vorzugsweise Stahlbeton, das heißt es ist eine Stahlbewehrung 24 enthalten. Nur in Figur 3a ist die Stahlbewehrung 24 dargestellt, sie kann optional aber in sämtlichen Ausführungsformen und Varianten der Erfindung eingesetzt werden.

Auf die Außenseite, hier die radiale Außenseite der inneren Wandschicht 22, ist vollflächig eine äußere Wandschicht 26 aufgetragen, die aus einem Feinbeton und einer in den Feinbeton eingebetteten textilen Bewehrung 28 besteht.

Feinbeton hat maximale Korngrößen von vorzugsweise kleiner 1 mm.

Die Dicke der äußeren Wandschicht beträgt vorzugsweise, dies ist nicht einschränkend zu verstehen, zwischen 10 und 50 mm. Dies ist normalerweise etwa maximal 20 %, vorzugsweise maximal 10 % der Dicke der den Druck aufnehmenden inneren Wandschicht 22.

Wie in den Figuren 3a bis 3d zu sehen ist, ist die textile Bewehrung 28 komplett in dem Feinbeton eingebettet und steht nicht nach außen vor oder ist von außen sichtbar.

Figur 4a zeigt eine Draufsicht auf eine solche textile Bewehrung 28. Diese textile Bewehrung ist vorzugsweise ein Textilgelege, und zwar ein bi- oder multidirektionales Grid, und kann auch ein 3-D-Gewebe genannt.

Die Bewehrung besteht aus Glasfasern, bevorzugt aber aus Kohlefasern.

Die Figuren 4a bis 4d zeigen verschiedene mögliche Ausführungsformen der textilen Bewehrung 28 mit unterschiedlichem Filamentverlauf. Während bei den Figuren 4a und 4c ein rein gitterförmiger Verlauf mit teilweise mehrfachen Längsfilamenten (Figur 4c) gezeigt ist (bidirektional), offenbaren die Figuren 4b und 4d zusätzlich oder alternativ diagonal verlaufende Filamente (mulitdirektional). Diese Ausführungen sorgen für eine erhöhte Belastbarkeit in Längsrichtung bzw. erhöhte Torsionssteifigkeit.

In jedem Fall ist die textile Bewehrung 28 so ausgeführt, dass sich Öffnungen 30 zwischen Filamenten ergeben, die so groß sind, dass der Feinbeton durch diese Öffnungen 30 hindurchwandern kann und keine Lufteinschlüsse erzeugt werden. Die Öffnungen 30 sind darüber hinaus größer gewählt, als die maximale Korngröße, die im Feinbeton vorhanden ist, vorzugsweise um den Faktor 6 - 8 größer. Die Größe der Öffnungen wird dabei durch die kürzeste durch den Flächenschwerpunkt der Öffnung gehende Diagonale bestimmt.

Bei der Ausführungsform nach Figur 3a ist nur eine Lage der textilen Bewehrung vorhanden oder mehrere, sich berührende, aufeinanderliegende Lagen.

Bei der Ausführungsform nach Figur 3b sind mehrere Einzellagen als textile Bewehrungen 28 vorhanden, die radial voneinander beabstandet sind, jedoch beide in die äußere Wandschicht 36 komplett eingebettet sind.

Bei der Ausführungsform nach Figur 3c sind ebenfalls mehrere voneinander beabstandete textile Bewehrungen 28 vorhanden, wobei hier beispielhaft die radial innere textile Bewehrung eine anders beschaffene als die äußere textile Bewehrung 28 ist.

Die Ausführungsform nach Figur 3d zeigt eine als 3D-Grid ausgeführte Bewehrung 28, mit einer vorkonfektionierten definierten Beabstandung, in dem gezeigten Fall zweier voneinander beabstandeter, über distanzhaltende Elemente, i. d. R. Garne, verbundener Gelege.

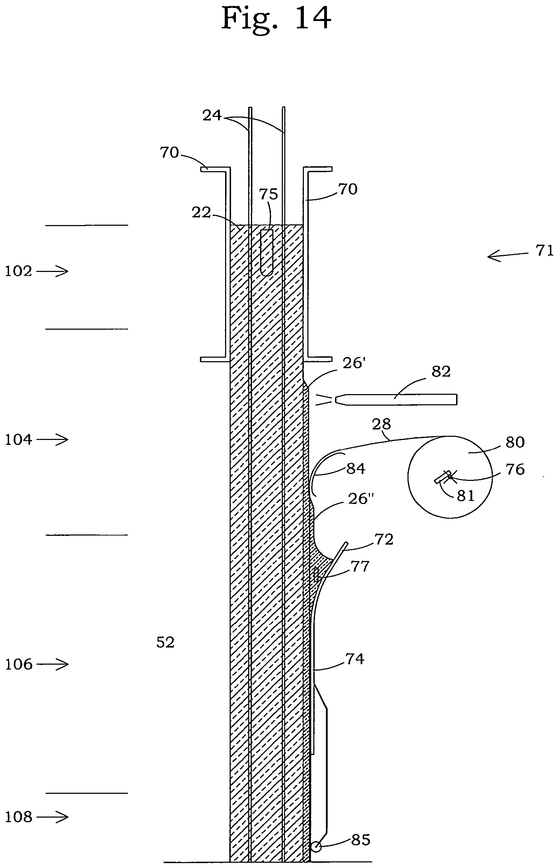

Die Herstellung des Betonhohlkörpers 14 wird im Folgenden anhand von Figur 14 erläutert, wobei sich dieses Herstellungsverfahren auf sämtliche Ausführungsformen bezieht.

Zuerst wird die innere Wandschicht 22 aus Massenbeton hergestellt, indem innen und außen entsprechende Schalungen 70 vorhanden sind, in die der Massenbeton 22 flüssig eingegossen wird und zum Beispiel mit einem Flaschenverdichter 75 höherer Verdichtungsenergie gerüttelt wird.

Die Schalungen 70 sind Teil der gesamten Gleitschalung 71, sodass der ganze Betonhohlkörper als Monolith über die Gesamthöhe des vorzugsweise mindestens 90m, vorzugsweise mindestens 130 m hohen Betonteiles des Turmes ausgeführt ist. Während der Beton die Gleitschalung grünstandfest im Bereich 104 verlässt und in tieferen Schichten (siehe Schicht 106) abbindet (Hydratation) und schließlich fest wird, siehe Bereich 108, wird er am oberen Ende der Schalung im Bereich 102 flüssig eingegossen.

Die äußere Wandschicht 26 wird wie bei einem Putz vorzugsweise im Spritzbewurf (siehe Spritzmaschine 82) aufgebracht, und zwar wenn die innere Wandschicht 22 noch nass ist und gerade so weit abgebunden hat, dass sie sich selbst tragen kann und formstabil bleibt (grünstandfest).

Es kann dabei je nach Verarbeitungsrichtung der textilen Bewehrung zuerst eine dünne Lage Feinbeton 26' auf die innere Wandschicht 22 aufgetragen werden. Dann wird die textile Bewehrung 28 vorzugsweise von einer Rolle 80 abgerollt.

An der Gleitschalung 71 sind über den Umfang verteilt mehrere Rollenhalterungen 76 vorgesehen, auf denen die Rollen 80 sitzen.

Eine Bremse 81 für die Rolle 80 sorgt dafür, dass die Bewehrung 28 leicht gestrafft abgerollt und aufgebracht werden kann. Der Ablauf kann so oft wiederholt werden, bis ausreichend Lagen Bewehrung 28 aufgebracht sind. Schließlich wird dann noch eine weitere dünne Lage Feinbeton 26" aufgebracht, sodass die textile Bewehrung 28 von außen nicht zu sehen ist.

Dabei kann auf der radialen Außenseite des Bauwerks vorzugsweise eine weitere, nachlaufende Gleitschalung 74 vorhanden sein, die den Feinbeton 26, 26', 26" mittels eines Trichters 72, eines Hochfrequenzverdichters 77 niedriger Eindringtiefe und eines nachlaufenden Endabschnitts 74 verdichtet und glatt abzieht.

Die Bewehrung 28 kann über wenigstens eine vorzugsweise an der Gleitschalung 71 befestigte, verstellbare Führung 84 zum Beispiel in Längsrichtung (hier Gleitrichtung) ausgerichtet werden.

Lagerrollen 85 an der Gleitschalung 71 rollen an der schon weiter abgebundenen Außenseite der Außenwand ab und lagern die Gleitschalung 71 radial.

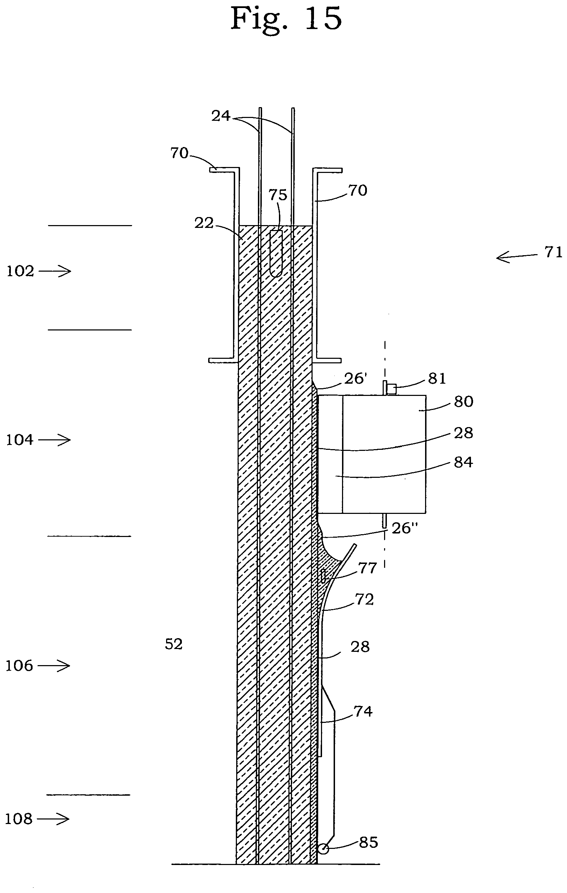

In Figur 15 ist die Rolle 80 vertikal stehend angeordnet. Über die Führung 84 wird die Bewehrung 28, die quer zur Gleitrichtung abgerollt wird, zum Feinbeton 26' geführt. Es sind auch diagonale oder kreuzwickelnde oder kombinierte Abwickelvorgänge möglich.

Die Schalungen 70 und die Nachlaufschalung 74 mit der Führung 84 sowie die entsprechenden Rollenhalterungen sind miteinander mechanisch zur Bildung der Gleitschalung 71 verbunden. Gegebenenfalls können auch die Verdichter 75, 77 bereits Teil der Gleitschalung 71 sein.

Der Hochfrequenzverdichter 77 muss nicht in den Feinbeton 26 ragen, es wäre auch möglich, dass nur die nachlaufende Gleitschalung 74 in Hochfrequenzschwingungen versetzt wird.

Durch die Herstellung der Schichten nass-in-nass binden die Schichten 22, 26 gemeinsam ab, und es kommt zu einer stoffschlüssigen Verbindung über die komplette Oberfläche auf der Außenseite der inneren Wandschicht 22, sodass nicht die Gefahr des Abreißens der äußeren Wandschicht 26 unter Belastung besteht.

Gemäß der bevorzugten Ausführungsform ist der Betonhohlkörper 14 außenseitig vollständig von der äußeren Wandschicht 26 in Umfangsrichtung umgeben, das heißt quer zur Hauptbelastungsrichtung, die im vorliegenden Fall durch die auf den Rotor wirkende Last verursacht wird (Biegung).

Bei den gezeigten Ausführungsformen erstreckt sich auch die textile Bewehrung 28 komplett um die Außenseite des Betonhohlkörpers herum.

Wenn die textile Bewehrung 28 in Bahnen hergestellt und angeliefert wird, sind verschiedene Möglichkeiten vorhanden, wie die Bewehrung aufgebracht wird. Einerseits können sich seitlich überlappende Längsbahnen über die gesamte Länge des Hohlkörpers erstrecken (siehe Längsbahn 40 in Figur 1).

Alternativ oder zusätzlich kann auch eine Bahn 42 in Querrichtung zumindest einmal um den Umfang der inneren Wandschicht 22 gewickelt sein. Weiter alternativ oder zusätzlich können Bahnen 44 auch spiralförmig gewickelt werden. Diese Optionen lassen sich beliebig miteinander kombinieren.

Bevorzugt, dies ist nicht einschränkend zu verstehen, überlappen sich benachbarte Bahnabschnitte randseitig in Übergreifungen.

Eine weitere Möglichkeit besteht darin, die Bahnen 46 sich kreuzförmig überlappen zu lassen (siehe Figur 1), indem sie zum Beispiel jeweils in Gegenrichtungen spiralförmig gewickelt werden.

Die textile Bewehrung 28 sollte vor dem Einbau außenseitig mit einer Haftschicht versehen sein und/oder imprägniert sein.

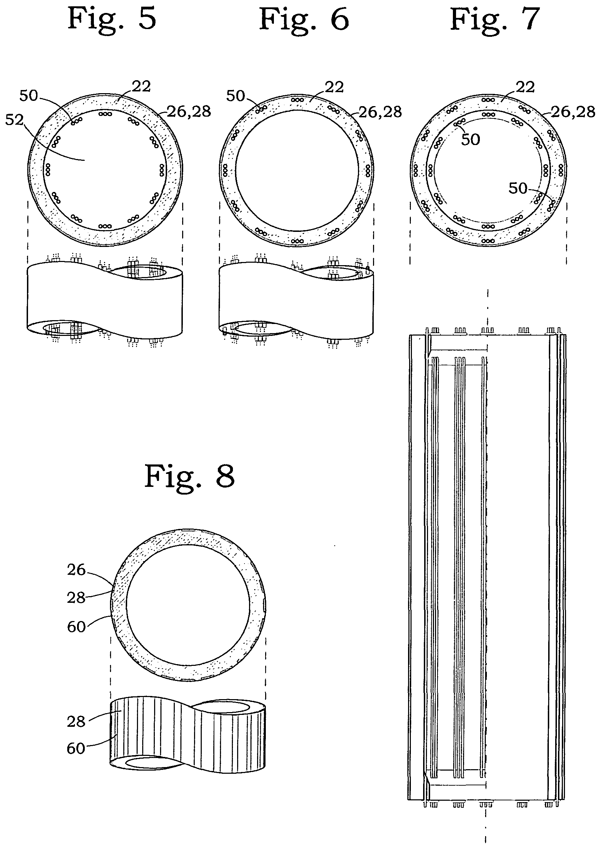

Gerade bei langgestreckten hochbelasteten Körpern wie z.B. Windenergieanlagen-Türmen ist es vorteilhaft, wenn das Bauwerk auch noch vorgespannt ist. Dies ist in den Figuren 5 bis 7 zu sehen. Spannglieder 50 verlaufen im Hohlraum 52, von der Innenseite der inneren Wandschicht 22 beabstandet (siehe Figur 5), oder die Spannglieder 50 werden in der inneren Wandschicht 22 untergebracht, das heißt, sie verlaufen vorzugsweise in vorab eingebrachten Kanälen in der Wandschicht 22. Die Kanäle erstrecken sich aber nicht bis zur äußeren Wandschicht 26.

Die äußere Wandschicht 26 ist stahlbewehrungsfrei. Dies ist in Figur 6 gezeigt.

Natürlich kann es auch vorteilhaft sein, Spannglieder 50 sowohl im Hohlraum als auch in der inneren Wandschicht 22 vorzusehen, wie dies in Figur 7 dargestellt ist.

Die Spannglieder sollten über die gesamte Länge des Betonhohlkörpers verlaufen, bezogen auf Figur 1 zumindest vom unteren Ende des Stahlturms 16 oder einem Zwischenflansch zwischen Stahlturm 16 und Betonhohlkörper 14 bis in das Fundament 12.

Durch die Spannglieder 50 wird die Außenwand vorgespannt, sodass im Lastfall die Zugspannung zwischen allen zuglastfähigen Elementen wirtschaftlich aufgeteilt werden kann und möglichst wenig Zugspannung auf die Außenhaut der Außenwand kommt.

Bei der Ausführungsform nach Figur 8 sind die Bahnen textiler Bewehrung 28 in Längsrichtung verlaufend in die äußere Schicht 26 eingebettet, wobei die Bahnen seitlich voneinander beabstandet sind, sodass in Umfangsrichtung zwischen benachbarten Bahnen Abschnitte 60 entstehen, die ohne textile Bewehrung 28 ausgeführt sind. In diesen Abschnitten 60 kann, was nicht einschränkend zu verstehen ist, der Feinbeton vorgesehen sein, um eine gleichmäßige Außenstruktur des Bauteils zu erzeugen.

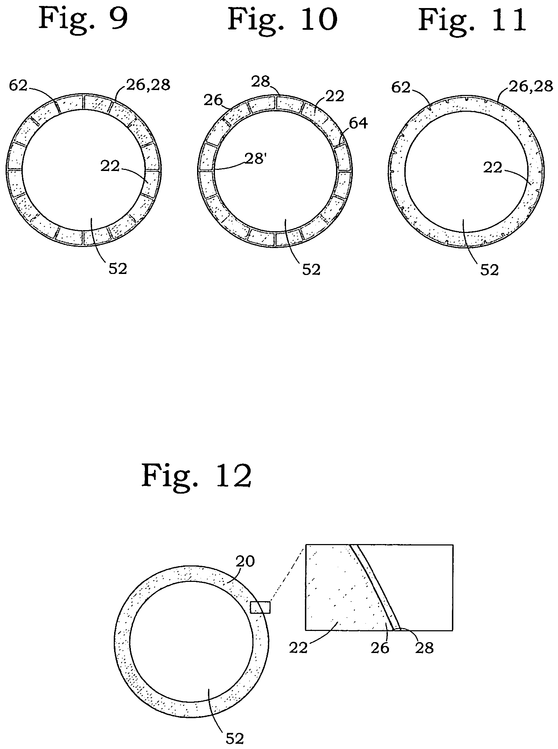

Bei den Ausführungsformen nach den Figuren 9 bis 10 gehen von der im Querschnitt ringförmigen textilen Bewehrung 28 radial nach innen ragende, rippenartige Fortsätze 62 aus textiler Bewehrung aus, die mehr oder weniger (siehe Figur 11) tief in die äußere Schicht 26 ragen. Gegebenenfalls können die Fortsätze 62 auch bis in die innere Wandschicht 22 gehen, wie dies in Figur 9 dargestellt ist. Hier erstrecken sich die Fortsätze sogar ganz durch die innere Wandschicht 22.

Bei der Ausführungsform nach Figur 10 ergibt sich sogar eine Art Hohlkastenstruktur für die textile Bewehrung 28, die außenseitig zwar in die äußere Wandschicht 26 eingebettet ist, sich dann aber bis durch die innere Wandschicht 22 zur radialen Innenseite der Außenwand 20 erstreckt, wo eine im Querschnitt gesehen geschlossene, ringförmige textile Bewehrung 28 oder Bewehrungsschicht 28' vorhanden ist. Bei dieser Ausführungsform sollte die Größe der Öffnungen in der textilen Bewehrung 28 im Bereich der radialen Stege 64 größer, vorzugsweise deutlich größer als die Korngröße des Massenbetons 22 sein.

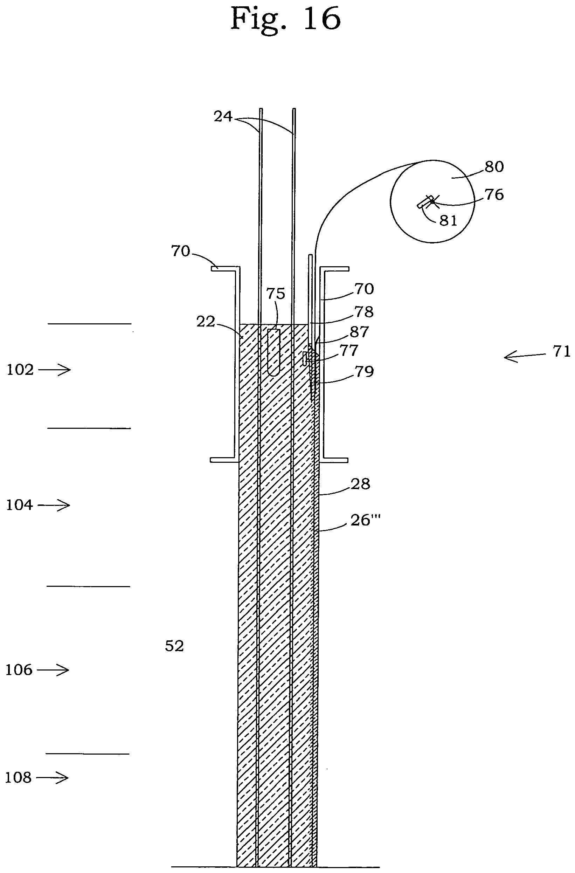

Die Figuren 12 und 16 zeigen eine Variante des bisher beschriebenen Verfahrens. Hier wird die textile Bewehrung 28 zwischen den Schalungen 70 zunächst etwas beabstandet von der Innenseite der äußeren Schalung 70 durch eine an der Schalung 70 befestigte, in den Zwischenraum zwischen den Schalungen 70 ragende Stützstruktur 87 gehalten. Anschließend wird zwischen der Bewehrung 28 und der inneren Schalung Massenbeton 22 eingegossen. Der Massenbeton 22 hat eine solche auf die Öffnungen in der textilen Bewehrung 28 abgestimmte Korngrößenverteilung, dass kleine Körner und der Zementleim durch die Öffnungen der Bewehrung 28 hindurchtreten können, wobei größere Körner aber innenseitig durch ein an einer Halterung 78 befestigtes radial innenseitiges Gatter 79 zurückgehalten werden. Das Gatter 79 ist ebenfalls an der Schalung 70 befestigt. Somit ergeben sich unterschiedliche Schichten, eine innere Schicht mit großer Korngröße, die durch den Massenbeton in seiner Grundstruktur definiert ist, und eine äußere Schicht 26"', die wie ein Feinbeton aufgebaut ist, jedoch sozusagen durch eine Art Aussieben, durch ein kontrolliertes Entmischen des Massenbetons entsteht. Die Schichten 22, 26"' gehen ineinander über und sind nass-in-nass hergestellt.

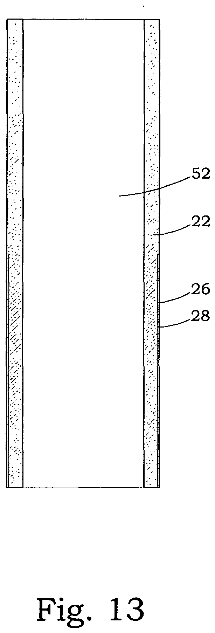

Figur 13 zeigt eine Variante, bei der sich die textile Bewehrung 28 und/oder die gesamte äußere Wandschicht 26 nur über eine Teillänge des Hohlkörpers erstreckt, um Kosten zu sparen. Bezogen auf einen Turm kann dies beispielsweise der untere Abschnitt des Betonturms sein, was jedoch nicht einschränkend zu verstehen ist.

Die Vorteile der Herstellung des Verbundbauteils sind Materialgerechtheit und Verarbeitungsgerchtheit. Die Vorteile des hergestellten Verbundbauteils selbst bestehen in einem Zusammenspiel der unterschiedlichen Materialeigenschaften von Textilbeton und Massenbeton. Die hervorgebrachten Eigenschaften des Composite-Bauteils entsprechend im Wesentlichen den im Windenergieanlagen-Turmbau erwünschten Eigenschaften: hohe Ermüdungsresistenz, gute Schwingungsdämpfung, niedrige Erregbarkeit, Schlankheit, Materialeffizienz und die Fähigkeit, multiaxiale Spannungen aufzunehmen und abzutragen, und der Rezyklierbarkeit der Baustoffe. Der simultane Herstellprozess durch einen kontinuierlichen Gleitvorgang ermöglicht in beiden dargestellten Fällen ein leistungsfähiges Verbundbauteil mit einer geringen Streuung der mittleren Wöhlerlinie und somit einen verbesserten Vertrauensbereich der Festigkeit des hervorgebrachten Bauteils.

## Patentansprüche

1. Gleitschalung zur Herstellung eines Betonhöhlkörpers eines lasttragenden Bauwerks, insbesondere eines Windenergieanlagen-Turms, **dadurch gekennzeichnet, dass** eine vorlaufende innenseitige und außenseitige Schalung (70) unter Bildung eines Ringraums zur Herstellung einer Wandschicht aus Massenbeton zwischen den Schalungen (70) vorgesehen ist sowie eine in Gleitrichtung nachlaufende Schalung (74), die der innen- und/oder der außenseitigen Schalung (70) zugeordnet ist und radial von der zugeordneten, vorlaufenden Schalung (70) beabstandet ist, zum Abziehen einer auf die innere aufgebrachten äußeren Wandschicht (26).

2. Gleitschalung nach Anspruch 1, **dadurch gekennzeichnet, dass** eine Rollenhalterung (76) zur Aufnahme einer Rolle (80) textiler Bewehrung (28) an der Schalung (71) angebracht ist, insbesondere wobei die Rollenhalterung mit einer Bremse (81) ausgestattet ist, um einen Abrollwiderstand auf die Rolle (80) auszuüben.

3. Gleitschalung nach einem der Ansprüche 1 und 2, **dadurch gekennzeichnet, dass** mehrere um den Umfang der ringförmig verlaufenden Gleitschalung (71) verteilte Rollenhalterungen (76) vorgesehen sind.

4. Gleitschalung nach Anspruch 2 oder 3, **dadurch gekennzeichnet, dass** eine der Rollenhalterung (76) zugeordnete Führung (84) vorgesehen ist, die zwischen der vor- und der nachlaufenden Schalung (70, 74) angeordnet ist, um eine Bahn textiler Bewehrung (28) von der Rolle (80) kommend nahe der inneren Wandschicht umzulenken.

5. Verfahren zum Herstellen eines lasttragenden Bauwerks, insbesondere eines Windenergieanlagen-Turms, das einen Betonhohlkörper (14) mit einer, einen Hohlraum (52) umgebenden Außenwand aus Beton aufweist, wobei die Außenwand mit Hilfe der Gleitschalung nach einem der vorhergehenden Ansprüche durch folgende Schritte produziert wird:
Herstellen einer inneren Wandschicht (22) aus Massenbeton, indem der Massenbeton in den Ringraum zwischen der vorlaufenden innenseitigen und der außenseitigen Schalung (70) gegeben wird,
Herstellen einer äußeren Wandschicht (26) aus Feinbeton unter Einbettung einer textilen Bewehrung (28) in die äußere Wandschicht (26), wobei die beiden Wandschichten (22, 26) ein Verbundbauteil bilden, und auf die außenseitig noch nasse, zuerst hergestellte der beiden Wandschichten (22, 26) direkt die andere Wandschicht zur Bildung eines Verbundes aufgebracht wird, und
Abziehen der äußeren Wandschicht (26) mittels der nachlaufenden Schalung (74).

6. Verfahren nach Anspruch 5, **dadurch gekennzeichnet, dass** die textile Bewehrung (28) ein Textilgelege ist.

7. Verfahren nach Anspruch 5 oder 6, **dadurch gekennzeichnet, dass** der Betonhohlkörper (14) außenseitig vollständig von der äußeren Wandschicht (26) umgeben ist.

8. Verfahren nach einem der Ansprüche 5 bis 7, **dadurch gekennzeichnet, dass** der Betonhohlkörper (14) eine langgestreckte Gestalt hat und über wenigstens eine axiale Teillänge in Umfangsrichtung von der äußeren Wandschicht (26), vorzugsweise in Umfangsrichtung über die wenigstens eine axiale Teillänge auch von der textilen Bewehrung (28) umgeben ist.

9. Verfahren nach einem der Ansprüche 5 bis 8, **dadurch gekennzeichnet, dass** zuerst die innere und anschließend an der inneren die äußere Wandschicht (22, 26) hergestellt wird, wobei die innere Wandschicht (22) aus Stahlbeton ist.

10. Verfahren nach einem der Ansprüche 5 bis 9, **dadurch gekennzeichnet, dass** die Wandschichten (22, 26) unter Verwendung derselben Betonzusammensetzung gleichzeitig hergestellt werden, indem die textile Bewehrung (28) mit Öffnungen versehen ist, die kleinere Festkörper im Beton hindurchlassen, sodass sich radial außerhalb der textilen Bewehrung (28) eine Feinbetonschicht ergibt und die textile Bewehrung als Filter für den eingegossenen Beton wirkt, oder ein Gatter (79) zwischen den Schalungen (70) zur Trennung des Massenbetons vorhanden ist.

11. Verfahren nach einem der Ansprüche 5 bis 10, **dadurch gekennzeichnet, dass** die textile Bewehrung (28) aus Glasfasern, Aramid, Basalt oder Kohlefasern besteht

12. Verfahren nach Anspruch 11, **dadurch gekennzeichnet, dass** die textile Bewehrung (28) vorzugsweise ein bi- oder multiaxiales 2D- oder 3D-Gelege ist.

13. Verfahren nach einem der Ansprüche 5 bis 12, **dadurch gekennzeichnet, dass** der Betonhohlkörper ein Abschnitt eines Windenergieanlagen-Turms ist und/oder dass der Betonhohlkörper eine Höhe von vorzugsweise wenigstens 90 m hat.

## Claims

1. Slipform to produce a hollow concrete body of a load-bearing structure, in particular a wind turbine tower, **characterised in that** a leading inside and outside slipform-shell (70) is provided, forming a ring-shaped space for producing a wall layer of bulk concrete between the slipform-shells (70), and a trailing slipform (74) in the sliding direction, which is associated with the inside and/or the outside of the slipform (70) and is radially spaced from the associated preceding slipform (70), for applying an outer wall layer (26) to the inside wall.

2. Slipform according to claim 1, **characterised in that** a roll holder (76) for holding a roll (80) of textile reinforcement (28) is attached to the slipform (71), in particular with the roll holder equipped with a brake (81) to exert a rolling resistance on the roll (80).

3. Slipform according to one of the claims 1 and 2, **characterised in that** a plurality of roll holders (76) distributed along the circumference of the ring-shaped slipform (71) are provided.

4. Slipform according to claim 2 or 3, **characterised in that** a guiding (84) associated with the roller holder (76) is provided, which is arranged between the preceding and trailing slipform (70, 74) in order to move the strip of textile reinforcement (28) coming from the roller (80) close to the inner wall layer.

5. Method for producing a load-bearing structure, in particular a wind turbine tower, that has a hollow concrete structure (14) with an outer wall of concrete encircling the hollow space (52), whereby the outer wall is produced by means of the slipform according to one of the preceding claims by the following steps:
Producing an inner wall layer (22) of bulk concrete by pouring bulk concrete into the annular space between the preceding inside and outside shell of the slipform (70),
producing an outer wall layer (26) made of fine concrete with the embedment of a textile reinforcement (28) into the outer wall layer (26), whereby the two wall layers (22, 26) form a composite component, with the second wall layer on the outside being directly applied onto the first of the two wall layers (22, 26) that is still wet, to form a composite, and
smoothing the outer wall layer (26) by means of the trailing slipform (74).

6. Method according to claim 5, **characterised in that** the textile reinforcement (28) is a textile scrim.

7. Method according to claim 5 or 6, **characterised in that** the hollow concrete body (14) is completely surrounded on the outside by the outer wall layer (26).

8. Method according to one of the claims 5 to 7, **characterised in that** the hollow concrete body (14) has an elongated shape and is surrounded in the peripheral direction over at least one axial partial length by the outer wall layer (26), preferably also surrounded in the peripheral direction over the at least one axial partial length by the textile reinforcement (28).

9. Method according to one of the claims 5 to 8, **characterised in that** firstly the inner wall layer (22) and then the outer wall layer (26) is produced onto the inner one, whereby the inner wall layer (22) is made out of reinforced concrete.

10. Method according to one of the claims 5 to 9, **characterized in that** the wall layers (22, 26) are produced simultaneously using the same concrete composition, whereby the textile reinforcement (28) has openings which allow smaller solids in the concrete to pass through, so that a fine concrete layer is produced radially outside the textile reinforcement (28) and the textile reinforcement acts as a filter for the poured concrete, or a gate (79) is present between the formworks (70) for separating the bulk concrete.

11. Method according to one of the claims 5 to 10, **characterised in that** the textile reinforcement (28) consists of glass fibres, aramid, basalt or carbon fibres.

12. Method according to claim 11, **characterized in that** the textile reinforcement (28) is preferably a bi-or multi-axial 2D or 3D textile scrim.

13. Method according to one of the claims 5 to 12, **characterized in that** the concrete hollow body is a section of a wind turbine tower and/or that the concrete hollow body has a height of preferably at least 90 m.

## Revendications

1. Coffrage glissant pour la fabrication d'un corps creux en béton d'une structure porteuse, en particulier d'une tour d'éolienne, **caractérisé en ce qu'**il est prévu un coffrage glissant intérieur et extérieur avant (70), formant un espace annulaire, pour la fabrication d'une couche de paroi en béton de masse entre les coffrages glissantes (70), ainsi qu'un coffrage glissant arrière (74) qui suit dans le sens du glissement et qui est associé au coffrage glissant avant intérieur et/ou extérieur (70) et qui est espacé radialement du coffrage glissant avant associé (70), pour étaler une couche de paroi extérieure (26) appliquée à la couche de paroi intérieur.

2. Coffrage glissant selon la revendication 1, **caractérisé en ce qu'**un porte-rouleau (76) destiné à recevoir un rouleau (80) de l'armature textile (28) est fixé au coffrage glissant (71), le porte-rouleau étant notamment équipé avec un frein (81) pour exercer une résistance au roulement sur le rouleau (80).

3. Coffrage glissant selon l'une des revendications 1 et 2, **caractérisé en ce qu'**ils sont prévu plusieurs supports de rouleaux (76) répartis sur la circonférence du coffrage glissant annulaire (71).

4. Coffrage glissant selon la revendication 2 ou 3, **caractérisé en ce qu'**il est prévu un guidage (84) associé au support de rouleau (76), qui est disposé entre le coffrage glissant avant et le coffrage glissant arrière (70, 74) afin de dévier une bande de l'armature textile (28) provenant du rouleau (80) près de la couche de paroi intérieure.

5. Méthode de fabrication d'une structure porteuse, en particulier d'une tour d'éolienne, qui comprend un corps creux en béton (14) avec une paroi extérieure en béton entourant une cavité (52), dans lequel la paroi extérieure est fabriquée à l'aide du coffrage glissant selon l'une des exigences précédentes par les étapes suivantes :
Produire une couche de paroi intérieure de béton de masse (22) en coulant le béton de masse dans l'espace annulaire entre le coffrage glissant intérieur et extérieur avant (70),
la fabrication d'une couche de paroi extérieure en béton fin (26) avec incorporation d'une armature textile (28) dans la couche de paroi extérieure (26), e les deux couches de paroi (22, 26) formant un élément composite, et la couche de paroi extérieure (26) étant appliquée directement sur la première des deux couches de paroi (22, 26), encore humide à l'extérieur, pour former un composite, et
étaler la couche de paroi extérieure (26) au moyen du coffrage glissant arrière (74).

6. Méthode selon la revendication 5, **caractérisée en ce que** l'armature textile (28) est un entrelacs textile.

7. Méthode selon la revendication 5 ou 6, **caractérisée en ce que** le corps creux en béton (14) est complètement entouré à l'extérieur par la couche de paroi extérieure (26).

8. Méthode selon l'une des revendications 5 à 7, **caractérisé en ce que** le corps creux en béton (14) présente une forme allongée et est entouré dans la direction périphérique sur au moins une longueur partielle axiale par la couche de paroi extérieure (26), de préférence également entouré dans la direction périphérique sur au moins une longueur partielle axiale par l'armature textile (28).

9. Méthode selon l'une des revendications 5 à 8, **caractérisé en ce que** la couche de paroi intérieure (22) est fabriquée avant et ensuite la couche de paroi extérieure (26) est produit sur la couche intérieure, dont la couche de paroi intérieure (22) est en béton armé.

10. Méthode selon l'une des revendications 5 à 9, **caractérisé en ce que** les couches de paroi (22, 26) sont fabriquées simultanément en utilisant la même composition de béton, **en ce que** l'armature textile (28) est pourvue d'ouvertures qui permettent le passage de plus petites matières solides dans le béton, de sorte qu'une fine couche de béton est produite radialement à l'extérieur de l'armature textile (28) et l'armature textile agit comme un filtre pour le béton coulé, ou une porte (79) est présente entre les coffrages glisses (70) pour séparer le béton de masse.

11. Méthode selon l'une des revendications 5 à 10, **caractérisée en ce que** l'armature textile (28) est constituée de fibres de verre, d'aramide, de basalte ou de carbone.

12. Méthode selon la revendication 11, **caractérisée en ce que** l'armature textile (28) est de préférence un tissu bi- ou multi-axial en 2D ou 3D.

13. Méthode selon l'une des revendications 5 à 12, **caractérisée en ce que** le corps creux en béton est une section d'une tour d'éolienne et/ou que le corps creux en béton a une hauteur d'au moins 90 m de préférence.
